# EUROPEAN PATENT APPLICATION

(11) **EP 2 942 232 A1**
(43) Date of publication of application: **11.11.2015**
(21) Application number: 14177448.9
(22) Date of filing: 17.07.2014
(51) Int. Cl.: B60P 3/025, E04H 15/06

(54) **AN AWNING SYSTEM FOR MOTOR VEHICLES.**

(30) Priority: 08.05.2014 IT FI20140107
(71) Applicant: Bonicoli, Renzo, 56025 Pontedera (Pisa) (IT)
(72) Inventor: Bonicoli, Renzo, 56025 Pontedera (Pisa) (IT)
(74) Representative: Paparo, Aldo

(57) **Abstract**

An awning system for motor vehicles, comprising: a base structure (2), a movable retaining frame (3), tilting means (4) for tilting the movable retaining frame (3), at least one cloth (5) unfoldable between a gathered position in which it is contained in the movable retaining frame (3) and an extended position, and a closing element (8) for closing the movable retaining frame (3).

The closing element (8) is movable between a closing position in which it closes the movable retaining frame (3) and an opening position in which the cloth (5) can be unfolded from the movable retaining frame (3).

The closing element (8) is configured to receive and accompany the cloth (5) in the movement between the opening position and the closing position during a stage of closing the awning system (1).

## Description

The present invention relates to an awning system for motor vehicles. The present invention has particular applicability in the sector of trade and the manufacture of accessories for motor vehicles.

Awning systems for motor vehicles are known today, in particular awning systems for mobile street traders.

Mobile street trader means a vendor who does not engage in his or her occupation in a stable place. The business of a street trader is generally concentrated in fairs or weekly markets, but is also conducted in other crowded places, like tourist destinations, shopping centres, sports events, musical events or on any occasion in which there is a need for an awning system to cover an area in which a given activity must take place.

Mobile street traders are mainly vendors who conduct their business on public squares and in markets and use a motor vehicle, often a van, to travel and transport goods.

An awning system is generally installed on the motor vehicle; when the motor vehicle is parked in the place defined for conducting business, it enables an awning to be deployed to protect the area, usually located in front of the side door of the motor vehicle, against the sun and rain.

While the motor vehicle is travelling, on the other hand, the awning system is in a transport configuration, i.e. the awning is gathered up inside a housing covered by a cover.

Awning systems are by now almost all automatic, i.e. the movement of deploying the awning takes place by means of a remote control or manual actuation of levers which activate the mechanism.

At present, the most widely used known technique is represented by an awning system that comprises a housing that is fixed onto the roof rack of the motor vehicles, extends prevalently along the main direction of extension of the motor vehicle and is fitted with a cover hinged on the longitudinal lateral edge of the housing.

The housing, with a U-shaped cross section, is made up of tubular iron or stainless steel profiles. The housing is covered by a shell made of sheet iron, aluminium or stainless steel.

The housing is hinged, with the end of the lower longitudinal part lying on the roof rack on the side of the van's sliding door, to a structure integral with the roof rack. Two hydraulic cylinders positioned at the front and rear heads of the housing serve to tilt the housing outward, so the housing passes from a horizontal position into a vertical one.

All cylinders are driven by a hydraulic power unit with a motor-pump tank, valves and solenoid valves included in a single block lying on the roof rack. Low-voltage power is supplied by the battery of the van itself.

The closures for the front and rear heads of the housing remain fixed to the structure on the roof rack during and after the process of tilting the housing.

Once the housing has been tilted into a vertical position, a device for gathering up the flaps of the awning and engaged with the housing, i.e. a tubular frame with a shape similar to a rectangle and hinged on its long side to the end of the long side of the housing, is tilted downwards by means of two hydraulic cylinders, passing from a vertical to a horizontal position. This lowering causes the flaps of the awning cloth to fall downward.

During the closure of the awning system, this device tilts in a reverse manner relative to the tilting for opening and by doing so it gathers up the flaps of the awning, accompanying it back into the housing with its movement.

Two shafts are transversely inserted at the inner edges of the housing; the awning support rods are generally fixed to them. These shafts are pushed by hydraulic cylinders so as to rotate and open, in a fan-like manner, the awning cloth in the area in front of the van's side door.

In the rest condition, all the rods of the awning system fan are kept inside the housing.

According to the original technique, the movements of tilting the housing and cloth gathering device were achieved by manually moving specific mechanical winches. While deploying the awning cloth was achieved by simultaneously pulling, with a string in a pulley, the ends of the two projecting rods integral with respective rotation shafts. Subsequently and progressively, the mechanical winches were replaced with hydraulic cylinders powered by a hydraulic power unit. The controls went from electric pushbutton controls to remote controls.

The awning systems of the prior art pose a number of problems. First of all, one of the main problems lies in the excessive weight of the system, which influences fuel consumption and the wear on the van tyres. In fact, the structure of the awning system, as said previously, is mainly constructed of iron or steel.

The complex arrangement of oil-filled hydraulic cylinders likewise has a considerable weight. Their connection to the hydraulic power unit with flexible tubes can give rise, moreover, to oil leaks in the connections, above all due to variations in atmospheric temperature which make the oil more or less fluid, as well as provoking thermal expansions in the metal parts of the fittings.

The hydraulic power unit and oil tank, motor, pump, valves and modular plates have excessive weight and together with the distribution system are characterized by a very high failure rate, due to the excessive number of components.

Another drawback is associated with the weight imbalance generated by the awning system, which is installed on the van at the lateral edge of the roof on the side of the openable sliding door.

The lateral overload due to the awning system considerably unbalances the centre of gravity of the motor vehicle toward the side the housing is installed on. This results in a greater difficulty in driving, above all in negotiating bends, and greater wear on the tyres that bear the most weight.

The complete dependency on the van battery for the electrical power supply is another problem of fundamental relevance. If there is a system failure or the battery runs out while the awning is open in a marketplace, the awning cannot be closed. Moreover, the movement of the awning absorbs electricity and drains power from the van battery, so the trader is usually obliged to set up the awning system with the van engine running. In this context, the technical task at the basis of the present invention is to propose an awning system for motor vehicles which overcomes one or more of the above-mentioned drawbacks of the prior art.

In particular, it is an object of the present invention to provide an awning system for motor vehicles that is structurally more simple and lightweight. The stated technical task and the specified objects are substantially achieved by an awning system for motor vehicles comprising the technical features set forth in one or more of the appended claims.

In particular, the present invention envisages an awning system for motor vehicles, comprising: a base structure, a movable retaining frame, tilting means for tilting the movable retaining frame and at least one cloth.

The base structure is configured to engage the awning system to the roof of a motor vehicle.

The movable retaining frame has a main direction of extension and is suitable for arrangement parallel to a main direction of extension of the motor vehicle. The retaining frame is engaged to the base structure by means of a first hinge.

The tilting means tilt the movable retaining frame along a tilt axis parallel to the main direction of extension of the movable retaining frame and passing through the first hinge.

The cloth is unfoldable between a gathered position in which it is contained in the movable retaining frame and an extended position.

The awning system comprises a closing element for closing the movable retaining frame, and which is movable between a closing position in which it closes the movable retaining frame and an opening position in which the cloth can be unfolded from the movable retaining frame.

The closing element is configured to receive and accompany the cloth during a stage of closing the awning system for motor vehicles, in the movement between the opening position and the closing position.

In accordance with a possible different aspect, the present invention regards an awning system for motor vehicles, comprising: a base structure, a movable retaining frame, tilting means for tilting the movable retaining frame and at least one cloth.

The base structure is configured to engage the awning system with the roof of a motor vehicle.

The movable retaining frame has a main direction of extension and is suitable for arrangement parallel to a main direction of extension of the motor vehicle. The retaining frame is engaged to the base structure by means of a first hinge.

The tilting means are suitable for tilting the movable retaining frame along a tilt axis parallel to the main direction of extension of the movable retaining frame and passing through the first hinge.

The cloth is unfoldable between a gathered position, in which it is contained in the movable retaining frame, and an extended position.

The base structure is configured to define an operating configuration of the movable retaining frame and a resting configuration of the movable retaining frame differing from the operating configuration.

The base structure comprises movement means for moving the movable retaining frame from the resting configuration to the operating configuration and vice versa.

This aspect of the present invention provides an awning system for motor vehicles which, in the resting configuration - i.e. when the awning system is not in use, as during travel of the motor vehicle - reduces the unbalancing of the motor vehicle.

In accordance with a further possible different aspect, the present invention regards an awning system for motor vehicles, comprising: a base structure, a movable retaining frame, tilting means for tilting the movable retaining frame and at least one cloth.

The base structure is configured to engage the awning system with the roof of a motor vehicle.

The movable retaining frame has a main direction of extension and is suitable for arrangement parallel to a main direction of extension of the motor vehicle. The retaining frame is engaged to the base structure by means of a first hinge.

The tilting means tilt the movable retaining frame along a tilt axis parallel to the main direction of extension of the movable retaining frame and passing through the first hinge.

The cloth is unfoldable between a gathered position in which it is contained in the movable retaining frame and a extended position.

The awning system for motor vehicles comprises electromechanical actuators powered by a fan and/or a solar panel.

This aspect of the present invention provides a self-powered awning system for motor vehicles that does not drain energy from power supply system of the motor vehicle.

The dependent claims, incorporated herein by reference, correspond to different embodiments of the invention.

Additional features and advantages of the present invention will be more apparent from the approximate, and hence non-limiting, description of a preferred but not exclusive embodiment of an awning system for motor vehicles as illustrated in the appended drawings, in which:
- figure 1 is a schematic cross section of the awning system for motor vehicles in the resting configuration according to a possible embodiment of the present invention,
- figure 2 is a schematic side view of the awning system for motor vehicles of figure 1,
- figure 3 is a longitudinal section of the awning system for motor vehicles in the use configuration,
- figure 4 is a schematic view from above of the awning system for motor vehicles of figure 3,
- figure 5 is a schematic cross section of the awning system of figure 1 in the operating configuration,
- figure 6 is a schematic cross section of the awning system of figure 1 during the opening/closing stage, and
- figure 7 is a schematic cross section of the awning system of figure 1 in the use configuration.

With reference to the appended figures, 1 indicates overall an awning system for motor vehicles.

The awning system 1 comprises: a base structure 2, a movable retaining frame 3, tilting means 4 for tilting the movable retaining frame 3 and at least one cloth 5.

The base structure 2 is configured to engage the awning system 1 with the roof T of a motor vehicle A. The base structure 3 is preferably constructed with a stainless steel truss and mounted on the roof rack of the motor vehicle A.

The movable retaining frame 3 is preferably constructed with a U-shaped profile so as to enclose the gathered cloth 5 within it.

The movable retaining frame 3 is engaged to the base structure 2 by means of a first hinge 6, has a main direction of extension X and is suitable for arrangement parallel to a main direction of extension Y of the motor vehicle A.

In other words, the movable retaining frame 3 is positioned longitudinally to the roof T of the motor vehicle A and is hinged to the base structure 2 with a resting edge, generally the edge located on the side of the motor vehicle A in which there is a side door, for example a sliding door P.

The base structure 2 is configured to define an operating configuration of the movable retaining frame 3 and a resting configuration of the movable retaining frame 3 differing from the operating configuration.

The base structure 2 comprises movement means for moving the movable retaining frame 3 from the resting configuration to the operating configuration and vice versa.

Resting configuration means the configuration of the awning system during travel of the motor vehicle.

The movement means comprise at least one carriage 7 slidable along a sliding direction Z perpendicular to the main direction of extension X of the movable retaining frame 3.

Preferably, the carriage 7 is a linear electromechanical actuator. Preferably, the movement means comprises two carriages 7.

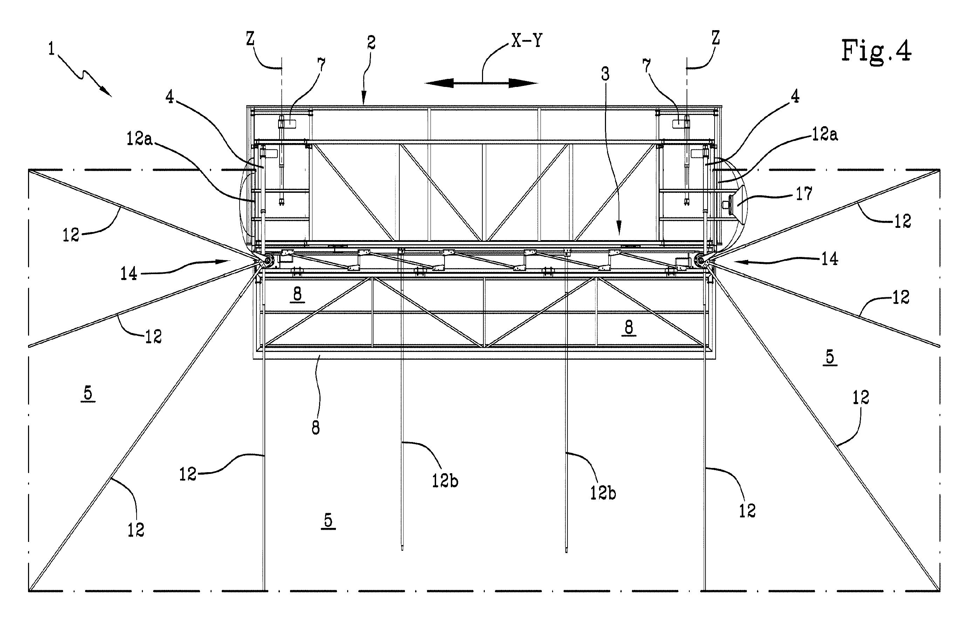

As illustrated in figure 4, in a possible embodiment according to the present invention, the carriages 7 are positioned at the transverse ends of the base structure 2, one in the rear portion and one in the front portion of the base structure 2.

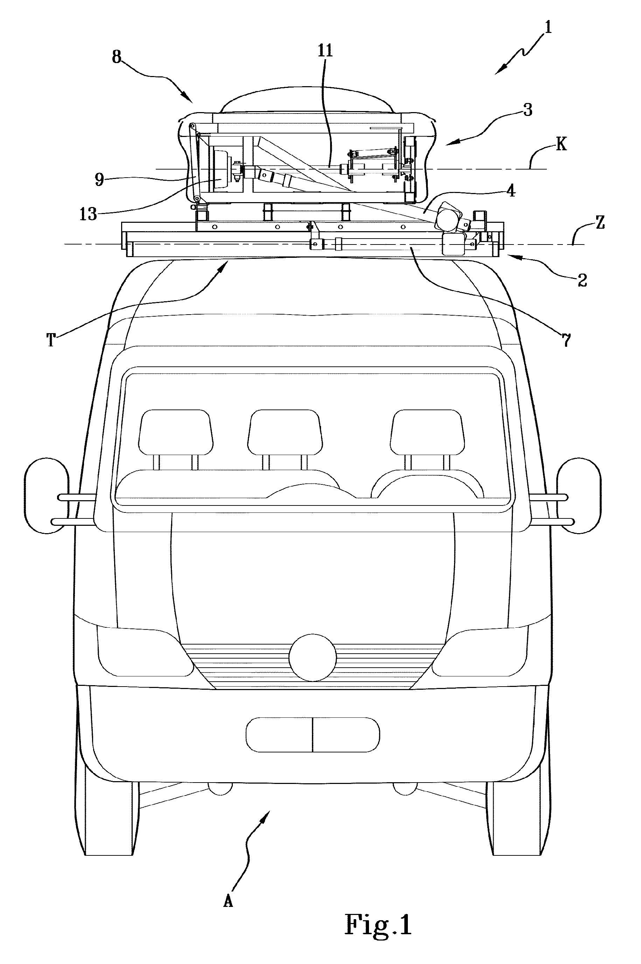

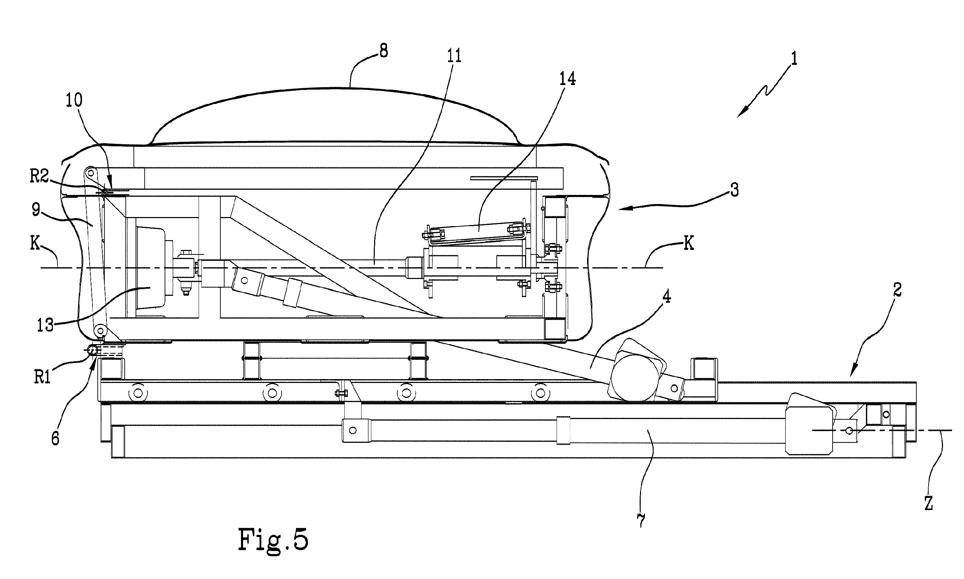

The two carriages 7 move the movable retaining frame 3 from a resting configuration, preferably central relative to the roof T of the motor vehicle A, to an operating configuration, in which the carriages 7 reach a travel limit, positioning the movable retaining frame 3 on the lateral edge of the roof T from which the cloth of the awning system 1 must be unfolded, as illustrated in figure 5; conversely, when the movable retaining frame 3 goes back into the operating configuration, the two carriages 7 move the movable retaining frame 3 toward the resting configuration, illustrated in figure 1.

Advantageously, in this manner the movable retaining frame 3, when in the resting configuration, is not unremovably fixed to the longitudinal edge of the roof T of the motor vehicle A as in the prior art, but can be moved toward a more stable position and does not unbalance the motor vehicle A. Therefore, after use, during the stage of closing the system 1, the movable retaining frame 3 can be advantageously moved toward the resting configuration, in a central position that is generally suitable for better distributing the weight of the awning system 1 on the motor vehicle A.

In this manner, the movable retaining frame 3 can be positioned in such a manner as to correctly balance the weight of the awning system 1 to maintain the centre of gravity of the motor vehicle A, which bears the weight of the awning system 1, spatially in a central zone of the motor vehicle A so as not to interfere with driving or consume the tyres more on the side of the door P of the motor vehicle A.

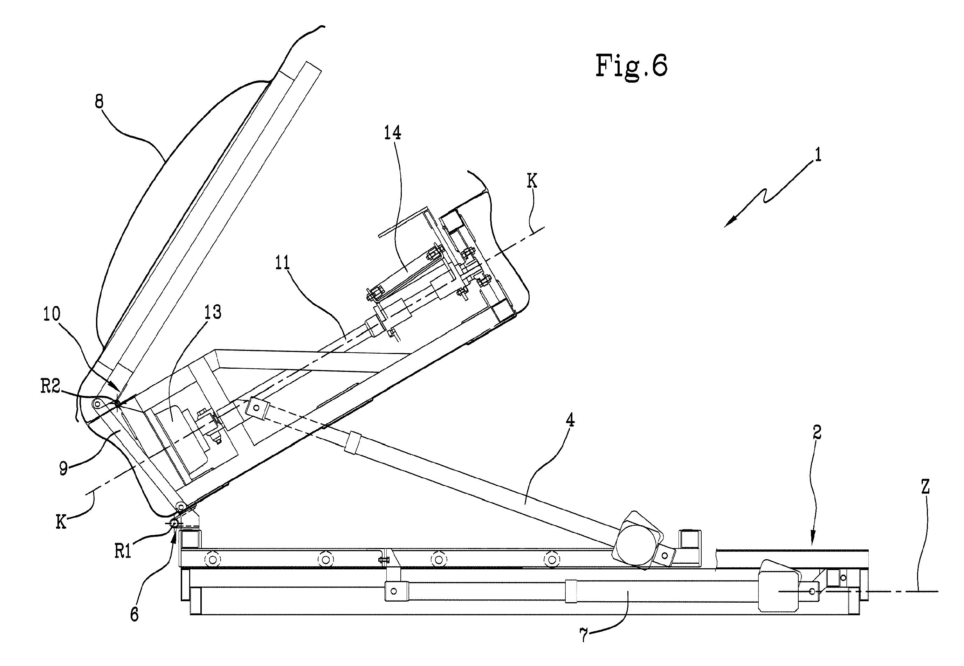

With reference to figures 6-7, the tilting means 4 of the awning system 1 are suitable for tilting the movable retaining frame 3 along a tilt axis R1 parallel to the main direction of extension X of the movable retaining frame 3 itself and passing through the first hinge 6.

Preferably, the tilting means 4 are active between the base structure 2 and the movable retaining frame 3.

Preferably, the tilting means 4 comprises at least one linear electromechanical actuator, even more preferably two.

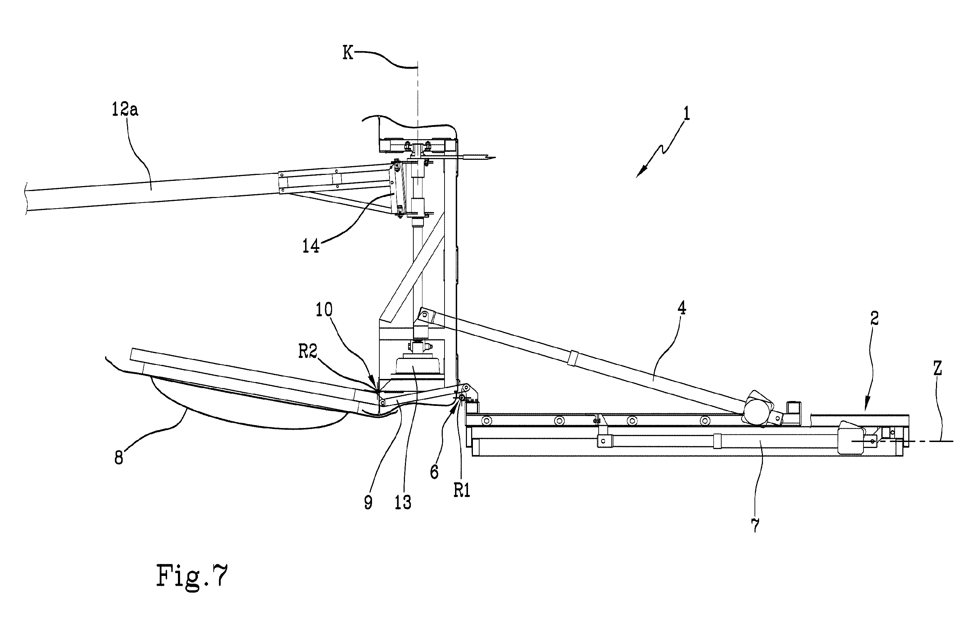

As illustrated in figure 7, the movable retaining frame 3 can be tilted via the tilting means 4 by at least a right angle relative to the surface of the roof T to set the movable retaining frame 3 in the correct position for the step of extending the cloth 5, which leads to the use configuration of the awning system 1.

The awning system 1 comprises a closing element 8 for closing the movable retaining frame 3, and which is movable between a closing position in which it closes the movable retaining frame 3 and an opening position in which the cloth 5 can be unfolded from the movable retaining frame 3.

The cloth 5 of the awning system 1 is unfoldable between a gathered position in which it is contained in the movable retaining frame 3 and a extended position in the use configuration, as illustrated in the figure 4. The closing element 8 is configured to receive and accompany the cloth 5 in the movement between the opening position, illustrated in figure 7, and the closing position, illustrated in figure 5, during a stage of closing the awning system 1 for motor vehicles,.

Advantageously, therefore, the closing element 8 performs a dual function of covering and protecting the cloth 5, as well as everything comprised in the movable retaining frame 3, and as a flaps gathering device. Therefore, unlike in the prior art, in which there are two distinct elements for covering the housing and gathering up the flaps of the cloth, with the present invention there is only one element 8 that performs both functions and at the same time considerably lightens the awning system 1 for motor vehicles.

The awning system 1 for motor vehicles according to the present invention comprises opening and closing means for opening and closing the closing element 8 between the opening position and the closing position or vice versa, during the process of tilting the movable retaining frame 3.

The means for opening and closing the closing element 8 comprises an actuating lever 9, hinged on one side to the base structure 2 and on the other side to the closing element 8, to control the opening and closing of the closing element 8 during the process of tilting the movable retaining frame 3.

The closing element 8 is tiltable along a tilt axis R2 that passes through a second hinge 10 serving to connect the closing element 8 with the movable retaining frame 3 and is parallel to the main direction of extension X of the movable retaining frame. The tilt axis R2 is located on the same side as the tilt axis R1.

In particular, the tilt axis R2 is located on the side of the movable retaining frame 3 which, in the operating configuration, is turned downward.

With reference to figures 5-7, it should be noted that the closing element 8 is preferably hinged to the movable retaining frame 3 in a manner that is diagonally opposite to the hinging of the same movable retaining frame 3 with the base structure 2, relative to the arrangement of the actuating lever 9.

In other words, this play of levers enables simultaneous opening of the closing element 8 and of the movable retaining frame 3, avoiding the need to use hydraulic cylinders as in the prior art, thus advantageously reducing the weight of the system 1 and the associated costs of producing it.

While the movable retaining frame 3 is being tilted toward a vertical position, as illustrated in the sequence of figures 1, 5-7, the progressive opening of the closing element 8 towards the sky takes place automatically via the actuating lever 9, so that it gradually tilts toward the opening side of the awning system 1.

The closing element 8 is tilted relative to the surface of the roof T of the motor vehicle A by an angle such as to leave the area in front of the movable retaining frame 3 free of obstacles during the step of extending the cloth 5. Said angle is preferably comprised between 75° and 90°. The movable retaining frame 3 and/or the closing element 8 comprise trusses, made of aluminium tubing for example.

The awning system 1 comprises at least one shaft 11 positioned transversely in the movable retaining frame 3, with which at least two rods 12 are rotatably engaged.

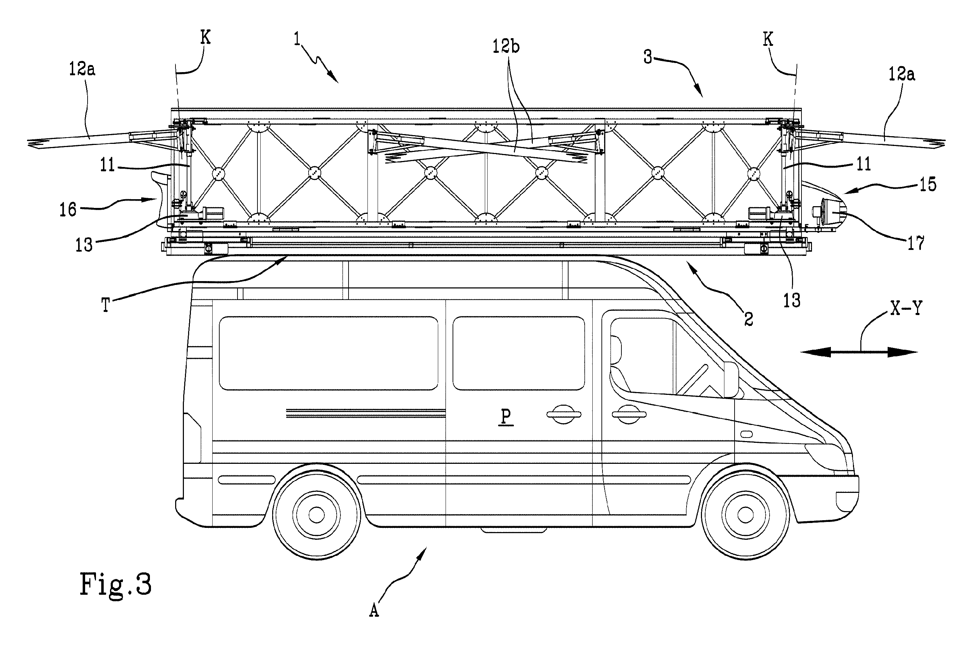

Preferably, there are two shafts 11, as illustrated in figure 3, positioned at the ends of the movable retaining frame 3.

The shafts 11 are configured to extend the cloth 5, which, together with the rods 12, will go to form the awning system 1 in the use configuration in which the cloth 5 is unfolded.

The rods 12 are rotatable around an axis of rotation K of the shaft 11 perpendicular to the main direction of extension X of the movable retaining frame 3 and are configured to engage with the cloth 5.

The shaft 11 is keyed onto a rotary electromechanical actuator 13 fastened to the movable retaining frame 3. On the side opposite the rotary electromechanical actuator 13 the shaft 11 rotates in a bushing fixed on a side opposite the one on which the rotary actuator 13 is fastened.

A main rod 12a is fixed at the high end of the shaft 11, opposite the rotary actuator 13, and moves integrally with the rotation of the shaft 11. In the part immediately below the main rod 12a, spoke-like elements 14 rotate freely on the same shaft 11; they are associated with four rod holders, preferably made of stainless steel and capable of supporting four rods 12, preferably made of aluminium tubing.

The rods 12 are arranged in such a way as to be superimposed and not collide with those of the other shaft 11.

In the closing position the rods 12 and main rods 12a are pushed into the movable retaining frame 3 by virtue of the rotation of the shaft 11 and thus of the main rod 12a integral therewith, which draws the rods 12 by means of an end stop.

During opening the rods 12 are drawn by the movement of the main rod 12a, to the end of which the first flap of the cloth 5 is fixed, whilst the remaining flaps are fixed to the ends of the remaining rods 12.

Upon activation with a remote control system, for example with a remote control handset, the shafts 11 start rotating one after another, staggered by a certain interval.

Once the cloth 5 has been unfolded and the rotations of the shafts 11 have ended, the operator must manually open two intermediate rods 12b which are free to rotate on fixed hinges in the movable retaining frame in an intermediate position between the two shafts 11. These two intermediate rods 12b, preferably telescopic, are inserted into the respective end pockets the cloth is provided with.

The closing of the awning system 1 takes place in exactly a reverse manner compared to the opening.

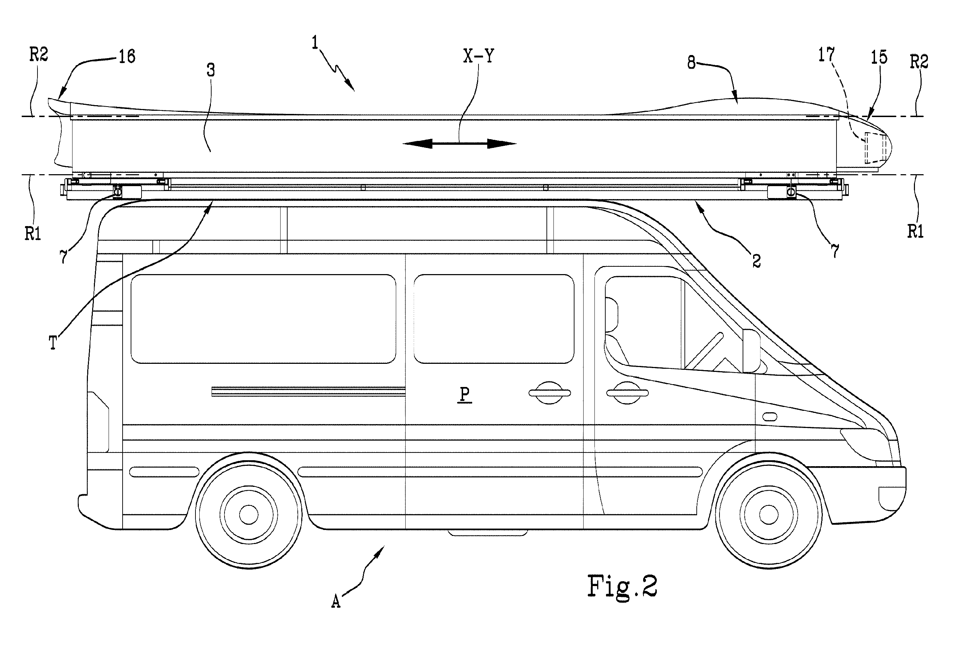

With reference to figure 2, the awning system 1 of the present invention comprises a front head 15 facing the front portion of the movable retaining frame 3 and/or a rear head 16 facing the rear portion of the movable retaining frame 3.

Preferably, the front head 15 and/or rear head 16 and/or the closing element 8 are made of recycled fibreglass.

Preferably, the movable retaining frame 3, the front head 15 and the rear head 16 are aligned in the resting configuration so as to take on an aerodynamic shape. In this manner, the awning system 1 poses less resistance to air during the travel of the motor vehicle A, thus reducing consumption and enabling more comfortable driving.

The front head 15 comprises an opening in the front part to convey air towards a fan 17. The fan 17 is connected to an electrical energy accumulator. Advantageously, during the travel of the motor vehicle A the air directed into the fan 17 sets the impeller of the fan 17 moving, which in turn produces electricity useful for operating the awning system 1, in particular for activating the electromechanical actuators 4,7,13.

The awning system 1 for motor vehicles can comprise a photovoltaic panel. If the routes to be travelled by the motor vehicle A are so short as not to permit complete charging of the accumulator, the power supply of the awning system 1 can be advantageously supplemented by the photovoltaic panel.

Advantageously, therefore, the awning system 1 is independent insofar as the energy aspect is concerned and is thus configured as an electrically self-powered awning system 1.

Thanks to the present invention, there is no longer any need to keep the motor vehicle A running during the process of opening and closing the cloth 5.

In the event of a failure, every electromechanical actuator can be released by operating the respective key inserted in each of them so that they can be moved and manoeuvred by hand.

It should be noted that the problem tied to the oil leaks of the hydraulic devices and fittings connecting the tubes and the hydraulic power unit have also been eliminated with the present invention, as they have been replaced with electromechanical actuators, thus considerably reducing the possibility of failure.

The awning system 1 according to the present invention proves to be like a veritable eco-innovative solution, which, besides using recycled and recyclable materials, simplifies the structure, considerably reducing the weight of the system, and is energetically self-sufficient.

The present invention achieves the proposed object, overcoming the aforementioned drawbacks in the prior art.

## Claims

1. An awning system for motor vehicles, comprising:
- a base structure (2) configured to engage said awning system 1 to the roof (T) of a motor vehicle (A),
- a movable retaining frame (3) having a main direction of extension (X) and suitable for arrangement parallel to a main direction of extension of the motor vehicle (Y), said movable retaining frame (3) being engaged to said base structure (2) by means of a first hinge (6),
- tilting means (4) for tilting the movable retaining frame (3) along a tilt axis (R1) parallel to the main direction of extension (X) of the movable retaining frame (3) and passing through said first hinge (6),
- at least one cloth (5) that is unfoldable between a gathered position, in which it is contained in said movable retaining frame, (3) and an extended position,
**characterised in that** it comprises a closing element (8) for closing said movable retaining frame (3), wherein said closing element (8) is movable between a closing position in which it closes said movable retaining frame (3) and an opening position in which said cloth (5) can be unfolded from said movable retaining frame (3), said closing element (8) being configured to receive and accompany said cloth (5) in the movement between said opening position and said closing position during a stage of closing the awning system (1).

2. The awning system for motor vehicles according to claim 1, comprising opening and closing means for opening and closing said closing element (8) between said opening position and said closing position or vice versa, during the process of tilting the movable retaining frame (3).

3. The awning system for motor vehicles according to claim 2, wherein said means for opening and closing the closing element (8) comprises an actuating lever (9), hinged on one side to the base structure (2) and on the other side to the closing element (8), to control the opening and closing of the closing element (8) during the process of tilting the movable retaining frame (3), said closing element (8) being tiltable along a tilt axis (R2) passing through a second hinge (10) that connects the closing element (8) with the movable retaining frame (3), said tilt axis (R2) being parallel to the main direction of extension (X) of the movable retaining frame (3).

4. The awning system for motor vehicles according to one or more of the preceding claims, wherein said base structure (2) is configured to define an operating configuration of said movable retaining frame (3) and a resting configuration of said movable retaining frame (3) differing from said operating configuration.

5. The awning system for motor vehicles according to claim 4, wherein said base structure (2) comprises movement means for moving the movable retaining frame (3) from the resting configuration to the operating configuration and vice versa.

6. The awning system for motor vehicles according to claim 5, wherein said movement means comprises a carriage (7), preferably two carriages (7), which are slidable along a sliding direction (Z) perpendicular to the main direction of extension (X) of the movable retaining frame (3).

7. The awning system for motor vehicles according to claim 6, wherein said at least one carriage (7) is a linear electromechanical actuator.

8. The awning system for motor vehicles according to one or more of the preceding claims, wherein said tilting means (4) is active between the base structure (2) and the movable retaining frame (3).

9. The awning system for motor vehicles according to one or more of the preceding claims, wherein said tilting means (4) comprises at least one linear electromechanical actuator, preferably two linear electromechanical actuators.

10. The awning system for motor vehicles according to one or more of the preceding claims, comprising at least one shaft (11) arranged transversely in the movable retaining frame (3) and to which at least two rods (12) are rotatably engaged, said rods (12) being rotatable about an axis of rotation (K) of the shaft (11) perpendicular to the main direction of extension (X) of the retaining frame (3), said rods (12) being configured to engage with said at least one cloth (5).

11. The awning system for motor vehicles according to claim 8, wherein said at least one shaft (11) is keyed onto a rotary electromechanical actuator (13) fixed to the movable retaining frame (3).

12. The awning system for motor vehicles according to one or more of the preceding claims, wherein said movable retaining frame (3) and/or said closing element (8) comprises trusses, made of aluminium tubing for example.

13. The awning system for motor vehicles according to one or more of the preceding claims, wherein said awning system (1) comprises a front head (15) facing the front portion of the movable retaining frame (3) and/or a rear head (16) facing the rear portion of the movable retaining frame (3).

14. The awning system for motor vehicles according to claim 13, wherein said front head (15) and/or said rear head (16) and/or said closing element (8) is made of recycled fibreglass.

15. The awning system for motor vehicles according to claim 13 or 14, wherein said front head (15) comprises an opening in the front part to convey air towards a fan (17), said fan (17) being connected to an electrical energy accumulator.

16. The awning system for motor vehicles according to one or more of claims 13-15, wherein said movable retaining frame (3), front head (15) and rear head (16) are aligned in the resting configuration so as to take on an aerodynamic shape.

17. The awning system for motor vehicles according to one or more of the preceding claims, comprising a photovoltaic panel.
